# EUROPEAN PATENT SPECIFICATION

(11) **EP 4 446 282 B1**
(45) Date of publication and mention of the grant of the patent: **15.10.2025**
(21) Application number: 24160438.8
(22) Date of filing: 29.02.2024
(51) Int. Cl.: C01B 33/32, H01M 10/054, H01M 4/36, H01M 4/58, H01M 4/62

(54) **CATHODE MATERIAL FOR SODIUM BATTERIES AND PREPARATION METHOD THEREOF**
KATHODENMATERIAL FÜR NATRIUMBATTERIEN UND HERSTELLUNGSVERFAHREN DAFÜR
MATÉRIAU DE CATHODE POUR BATTERIES AU SODIUM ET SON PROCÉDÉ DE PRÉPARATION

(30) Priority: 21.03.2023 CN 202310280551
(43) Date of publication of application: 16.10.2024
(73) Proprietor: Hubei Wanrun New Energy Technology Co., Ltd., Shiyan, Hubei 442500 (CN)
(72) Inventor: Wang, Qin, Shiyan City, Hubei Province, 442500 (CN)
(74) Representative: Studio Torta S.p.A.

(56) References cited:
- CN-A- 107 275 625
- CN-A- 109 678 166
- CN-B- 108 467 047
- CN-B- 109 607 556
- US-A1- 2016 365 578
- ANONYMOUS KARTHIKEYAN ET AL: "Facile solid-state synthesis of eco-friendly sodium iron silicate with exceptional sodium storage behaviour - ScienceDirect", vol. 283, 1 September 2018 (2018-09-01), AMSTERDAM, NL, pages 1384 - 1389, XP093201448, ISSN: 0013-4686, Retrieved from the Internet <URL:https://www.sciencedirect.com/science/article/pii/S0013468618315263?via=ihub> DOI: 10.1016/j.electacta.2018.07.034
- XIA NAN ET AL: "Electrochemical performances of Na2MnSiO4as an energy storage material in sodium-ion capacitors", JOURNAL OF APPLIED ELECTROCHEMISTRY, SPRINGER, DORDRECHT, NL, vol. 47, no. 3, 7 February 2017 (2017-02-07), pages 343 - 349, XP036173788, ISSN: 0021-891X, [retrieved on 20170207], DOI: 10.1007/S10800-016-1038-X
- WEI YANBIN ET AL: "(M = Fe, Mn, Co and Ni) sodium ion cathode materials", vol. 6, 1 November 2020 (2020-11-01), pages 2191 - 2199, XP093201411, ISSN: 2352-4847, Retrieved from the Internet <URL:https://pdf.sciencedirectassets.com/311225/1-s2.0-S2352484719X00025/1-s2.0-S2352484720312610/main.pdf?X-Amz-Security-Token=IQoJb3JpZ2luX2VjELf//////////wEaCXVzLWVhc3QtMSJHMEUCIQCLmGkAJaHs22gSQkIIxxrmVkt9oKaDpT2FbTdaBX0euwIgIjXOtuHOsRO/jymFSeQdXtPstgkhkKq22Pz2lmQbRIQquwUIz///////////ARAFGgwwNTkwMDM1N> DOI: 10.1016/j.egyr.2020.08.011

## Description

### TECHNICAL FIELD

The present invention relates to the field of cathode materials for sodium batteries, and more particularly, to a cathode material for sodium batteries and a preparation method thereof.

### BACKGROUND

The research on sodium ion batteries has attracted continuous attention in recent years due to the abundant reserves of sodium resources and a working principle similar to that of lithium-ion batteries, and the sodium ion battery is one of the new energy storage technologies expected to promote low-cost applications and sustainable development of energy storage technology. Polyanionic compounds are a class of high-performance and high-safety cathode materials which have been widely studied, and have strong covalent bonds in their structures that help stabilize the structural framework, thereby effectively improving the safety of the electrode during charging and discharging.

However, the polyanionic cathodes reported so far are difficult to achieve multi-electron reactions under the condition of a single polyanionic group, which severely limits their energy utilization. Taking sodium iron silicate (Na₂FeSiO₄) as an example, although theoretically it can achieve a two-electron reaction with a high theoretical capacity up to 276 mAh/g, its actual capacity is far below the theoretical capacity due to the low intrinsic electron conductivity of Na₂FeSiO₄, and the slow charge exchange process in the electrode, so the Na₂FeSiO₄ cathode cannot achieve multi-electron reactions within the safe voltage window of the electrolyte.

Professor JIANG, Yinzhu et al. from Zhejiang University designed the structural framework of sodium iron silicate, and chose fluoride ions as modifiers for oxygen substitution. Kinetically, the introduction of fluoride ions disrupts the local charge balance in the Na₂FeSiO₄ structure, increasing the electron transfer pathway and thereby accelerating charge transfer. Thermodynamically, the introduction of fluorine has been shown for the first time to stabilize the Fe⁴⁺-containing mesophase, thereby unlocking the Fe³⁺/Fe⁴⁺ redox reaction. The specific capacity of the prepared fluorine substituted sodium iron silicate cathode (NFSF) was up to 271 mAh/g, and a complete reversible two-electron reaction was achieved. However, the preparation process in the above-mentioned paper is relatively complex and cannot be industrialized.

The Article "Facile solid-state synthesis of eco-friendly sodium iron silicate with exceptional sodium storage behavior" by KARTHIKEYAN ET AL., ELECTROCHIMICA ACTA vol. 283, 1 September 2018 (2018-09-01), pages 1384-1389, discloses a cathode material for sodium batteries comprising a carbon layer-coated sodium iron silicate. From CN 107 275 625 A and CN 108 467 047 B, carbon layer-coated lithium iron silicate doped with manganese and titanium are known.

### SUMMARY

In view of the above, it is an object of the present invention to provide a cathode material for sodium batteries and a preparation method thereof. Through doping with titanium and manganese, as well as carbon coating, the cathode material becomes easier to process while enhancing the capacity of resultant batteries.

In order to achieve the above object, the present invention adopts the following technical scheme:
a cathode material for sodium batteries, including a carbon layer-coated sodium iron manganese titanium silicate having a molecular formula of Na_{q}FeₓMn_{y}(TiO₂)_{z}(SiO₄)ₘ, where 1.5 ≤ q ≤ 2.5, 0.7 ≤ x ≤ 0.8, 0.2 ≤ y ≤ 0.3, 0.07 ≤ z ≤ 0.5, and 0.5 ≤ m ≤ 1.5.

The cathode material for sodium batteries according to the present invention has a specific surface area of 15-25 m²/g, preferably 19.75 m²/g; a powder resistivity of 8-12 Ω-cm, preferably 9.5 Ω-cm; a D50 particle size of 7-10 µm, preferably 7.8 µm; and a D90 particle size of 20-30 µm, preferably 25.3 µm.

The cathode material for sodium batteries according to the present invention has a tap density of 1-2 g/mL, preferably 0.95 g/mL; and
a compacted density of 1-3 g/mL, preferably 2.15 g/mL; and
the carbon layer has a thickness of 2-3 nm, preferably 2.5 nm.

The sodium iron manganese titanium silicate according to the present invention has a molecular formula of Na_{q}FeₓMn_{y}Ti_{z}(SiO₄)ₘ, where 1.5 ≤ q ≤ 2.5, 0.7 ≤ x ≤ 0.8, 0.2 ≤ y ≤ 0.3, 0.07 ≤ z ≤ 0.5, 0.5 ≤ m ≤ 1.5, preferably 1.8 ≤ q ≤ 2.0, 0.095 ≤ z ≤ 0.285, and 0.665 ≤ m ≤ 0.855.

The cathode material for sodium batteries according to the present invention has a formula of Na_{q}FeₓMn_{y}(TiO₂)_{z}(SiO₄)ₘ/C, where 1.5 ≤ q ≤ 2.5, 0.7 ≤ x ≤ 0.8, 0.2 ≤ y ≤ 0.3, 0.07 ≤ z ≤ 0.5, 0.5 ≤ m ≤ 1.5, preferably 1.8 ≤ q ≤ 2.0, 0.095 ≤ z ≤ 0.285, and 0.665 ≤ m ≤ 0.855.

In one example of the present invention, the sodium iron manganese titanium silicate has a molecular formula of Na_{1.97}Fe_{0.77}Mn_{0.25}(TiO₂)_{0.25}(SiO₄)_{0.77}, and the cathode material for sodium batteries has a molecular formula of Na_{1.97}Fe_{0.77}Mn_{0.25}(TiO₂)_{0.25}(SiO₄)_{0.77}/C.

The present invention also provides a preparation method of a cathode material for sodium batteries, including:
(1) mixing an iron source, a manganese source, a sodium source, and a solvent, and performing calcination to obtain a precursor;
(2) mixing the precursor with a silicate, a titanate, and an organic solvent to obtain a mixture, and calcining the mixture in the presence of an organic substance to obtain the cathode material for sodium batteries.

In the present invention, the molar ratio of the iron source, manganese source and sodium source is 1:(0.1-1):(5-10), preferably 1:(0.1-0.5):(7-10), and more preferably 1:0.45:7.

A mass ratio of the total mass of the iron source, manganese source and sodium source to the solvent is 1:(5-10), preferably 1:(4-8), and more preferably 1:6.

In the present invention, the molar ratio of sodium in the precursor, silicon in the silicate and titanium in the titanate is 2:(0.7-0.9):(0.1-0.3), preferably 2:0.8:0.25; and the mass ratio of the precursor to the organic solvent is 1:(1-10), preferably 1:(3-5), and more preferably 1:4.

In the step (2), the mass ratio of the organic substance to the mixture is 1:(0.02-0.05); the organic substance preferably participates in the calcination process in the form of gas, and the organic substance is preferably n-propanol gas. By vapor deposition method, carbon may be coated on the surface of sodium iron manganese titanium silicate more uniformly.

In the step (1) of the present invention, after the precursor is mixed with a silicate, a titanate and an organic solvent, a mixture is obtained, and the mixture is preferably pulverized; the pulverization is performed by way of grinding; and the grinding is performed at a temperature ≤ 45 °C until a particle size of 130 nm is achieved.

Before the calcination, the mixture obtained by mixing the iron source, the manganese source, the sodium source, and the solvent is preferably dried, preferably spray dried.

The sodium source is one or more of sodium nitrate, sodium hydroxide, sodium carbonate, sodium oxalate, sodium nitrite, disodium hydrogen phosphate, sodium bicarbonate, sodium citrate, anhydrous sodium sulfate, sodium stearate, sodium oleate, sodium tartrate, sodium alginate, sodium carboxymethyl cellulose or sodium lactate, preferably sodium nitrate.

The iron source is one or more of iron nitrate, iron citrate, iron stearate, iron oleate, iron tartrate, iron alginate, iron carboxymethyl cellulose or iron lactate, preferably iron nitrate.

The manganese source is one or more of manganese nitrate, manganese citrate, manganese stearate, manganese oleate, manganese tartrate, manganese alginate, manganese carboxymethyl cellulose, or manganese lactate, preferably manganese nitrate.

The silicate is one or more of isopropyl orthosilicate, ethyl orthosilicate or trimethylsiloxy silicate, preferably isopropyl orthosilicate.

The phthalate is one or more of tetraisopropyl titanate, tetrabutyl titanate or tetraethyl titanate, preferably tetraisopropyl titanate.

Nitrate has the property of easy decomposition, which may greatly reduce the reaction temperature and shorten the reaction time, so that small primary particle size may be obtained and the subsequent reaction activity may be improved.

The calcination in the step (1) of the present invention is performed at a temperature of 650-750 °C, preferably 700 °C, for 4-6 h, preferably 5 h; after the calcination is completed, the material is preferably cooled to a temperature of ≤ 80 °C and then discharged; the heating rate of the calcination is preferably 2.5 °C/h.

The waste gas generated during the calcination is preferably absorbed with a sodium hydroxide solution to obtain a sodium nitrate solution which may be reused.

In the step (2) of the present invention, the calcination is performed at a temperature of 620 °C for 10-15 h;
the calcination includes a heating stage, a heat preservation stage, and a cooling stage, where the oxygen content in the furnace is maintained to be less than 5 ppm during the heating process, and preferably nitrogen is introduced to maintain the oxygen content in the furnace to be less than 5 ppm, and the heating rate in the heating stage is 1.0-2.5 °C/h;
in the heat preservation stage, an organic gas is introduced into the system, and the heat preservation time is 11-14 h;
in the cooling stage, the cooling rate is 1-1.5 °C/h; the cooling is stopped when the temperature of the material is lowered to a temperature of ≤ 60°C, and then the material is discharged.

In one example of the present invention, the organic gas is gaseous n-propanol, which is preheated to a vapor state.

In the present invention, the solvent is one or more of water, ethanol, acetone, preferably water; and the organic solvent is one or more of ethanol, propanol, ethylene glycol, acetone, and preferably ethanol.

In the step (2) of the present invention, the mixture is subjected to drying treatment to obtain a dried material;
the drying is carried out in the presence of an inert gas; the inert gas is preferably nitrogen, and the temperature of the nitrogen is 330-350 °C; the drying treatment is preferably spray-drying; the spray-drying is preferably pressure spray-drying, the gas pressure of the spray-drying is 8-12 atmospheres, and the volume of the gas intake per unit time is 800-2000 times the volume of slurry feed;
after the spray-drying is completed, the spray-dried material and the organic gas enter a cyclone dust-collecting tower for solid-gas separation, the solid is collected, the nitrogen and the organic gas are filtered through a dust-collecting cloth bag, then condensed, the organic solvent is recovered, and the nitrogen is recycled for use.

In the present invention, the mass of the organic gas fed in total is 0.002-0.006 times, preferably 0.04 times the mass of the spray-dried mass.

In the step (2) of the present invention, before drying, the mixture is preferably subjected to grinding; using zirconium balls as the grinding medium, the grinding process is cooled with cooling water to maintain the temperature of the organic solvent ≤ 45 °C, and grinding is performed until the particle size of the slurry is 130 nm to obtain a ground material.

In the present invention, the preparation method further includes: in the step (2), the calcined material is mixed with a binder and a diluent, and spray granulation is performed to obtain the cathode material for sodium batteries.

The pulverized material is preferably sieved through an 80-150 mesh; the calcined material is pulverized, then subjected to electromagnetic iron removal, and then mixed with a binder and a diluent; the removal of iron continues until the content of magnetic substances is less than 1 ppm, and then it is stopped.

The binder is polyurethane; the diluent is one or more of ethyl acetate, toluene, dimethylformamide, glycol ether, glycol ester.

The cathode material for sodium batteries obtained by the preparation method according to the present invention has a particle size of 5-15 µm, and a core-shell structure. The inner core is sodium iron manganese titanium silicate, and the surface of the sodium iron manganese titanium silicate is uniformly coated with a 2-3 nm carbon layer.

The present invention also provides a battery including the above cathode material for sodium batteries.

The present invention does not have special requirements for other raw materials, such as the anode, and preparation methods of the battery, and may use conventional raw materials and methods in the art.

The beneficial effects of the present invention are:
1. A precursor is prepared by using an iron source, a manganese source and a sodium source, and a material with uniform mixing of manganese, iron and sodium may be obtained; iron ions, sodium ions and manganese ions are mixed at an atomic level using a solution method, then the spray-drying method is used for drying, and then high-temperature calcination is performed. Since the size range involved in the mixing is relatively small, the ion migration distance may be greatly reduced.
2. In designing the cathode material for sodium batteries in the present invention, silicate and titanium are introduced. The introduction of titanium may achieve the doping of titanium, improve the ionic conductivity and thus improve the capacity; the introduction of titanium may also effectively consume the residual free sodium on the surface of the material, and titanium forms sodium titanate with free sodium ions, thereby improving the processability and further improving the capacity of resultant batteries.
3. In the present invention, silicate esters and titanate esters are used as raw materials, the silicate esters and the titanate esters can be completely dissolved in an organic solvent. A silicate ester and a titanate ester are mixed with a precursor and then spray dried; the mixture of the precursor, the silicate ester and the titanate ester crystallizes and precipitates, making the mixing more thorough and the subsequent reactions more complete. Meanwhile, the alkyl groups in the organic substance thermally decomposes to produce a carbon source, which can effectively limit the growth of particles, obtaining materials with a small primary particle size. Compared to the method of introducing an additional carbon source, this can improve the carbon coating rate, and the coating effect is better. Also, in the organic system, the dispersibility of sodium iron manganese titanium silicate is better, making the primary particle size of the final product more uniform.
4. According to the present invention, during the heat preservation stage of calcination, organic gas is introduced into the system through a vapor deposition method. At sites where iron ions are not covered by carbon, i.e., where iron ions are exposed, organic gas will be catalytically cracked into carbon which adheres to these sites, further improving the uniformity of carbon coating.
5. In the spray-drying stage of the present invention, the particle size is controlled, and the final product is directly sieved without pulverization to achieve the granulation of spherical particles with a particle size of 5-15 µm. The spray drying may increase the solid content in the final process of slurry homogenization, thereby improving the processability, reducing cost, and also improving the compacted density of the product's electrode plate.

### BRIEF DESCRIPTION OF DRAWINGS

Fig. 1 is an SEM image of the sintered and unpulverized precursor in step (1) of Example 1;
Fig. 2 is an SEM image of the sintered and pulverized precursor in step (1) of Example 1;
Fig. 3 is an SEM image of the cathode material for sodium batteries obtained from Example 1;
Fig. 4 is a transmission electron micrograph of the pulverized cathode material for sodium batteries obtained from Example 1;
Fig. 5 is the charge-discharge curve of the cathode material for sodium batteries obtained from Example 1;
Fig. 6 is the cyclic curve of the cathode material for sodium batteries obtained from Example 1.

### DETAILED DESCRIPTION

The technical solutions of the present invention will be described clearly and completely with reference to the following examples, and it should be apparent that the described examples are a part, not all, examples of the present invention.

In order to further illustrate the present invention, the following examples are set forth in detail. The starting materials used in the following examples of the present invention are commercially available.

Electrochemical performance test: the proportion (mass ratio) of the electrode plate is electrode material: conductive graphite: PVDF=87:8:5.

CR2025 button cell was prepared with sodium metal as the reference electrode. The negative electrode was sodium plate and the electrolyte was sodium hexafluorophosphate. After the prepared button cell was allowed to stand at room temperature (25 °C) for 10 hours, the button cell was subjected to charge-discharge activation, and then the button cell was subjected to charge-discharge cycling test using a LAND battery charge-discharge tester.

The batteries were first cycled at a rate of 0.1C for 1 week, then at a rate of 0.2C for an additional 1 week, then at a rate of 0.5C for an additional 1 week, and then at a rate of 1C for an additional 1 week at room temperature (25 °C), where the charge-discharge voltage range of the batteries was controlled to in the voltage window of 1.0-4.5V for detection.

### Additional Performance Tests

Measurement of tap density: 50 g of material was taken, placed in a calibrated 100mL graduated cylinder, vibrated with an amplitude of 2 cm for 5000 cycles, and the tap density was calculated.

Measurement of compacted density: An electronic compacted density meter was used to take 1 g of material, place it in a mold, apply a pressure of 3T for 30s, and then calculate its density as the compacted density.

### Example 1

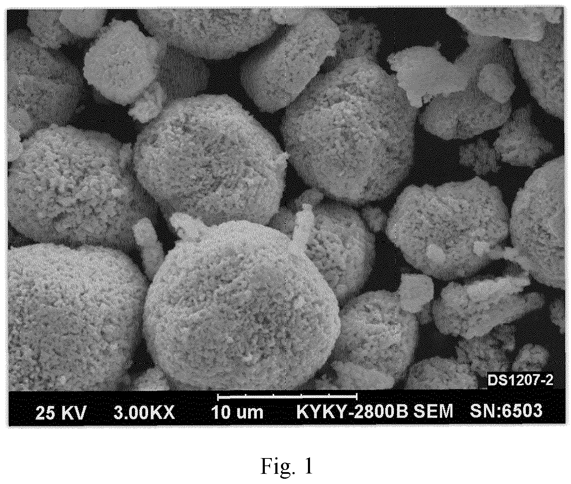

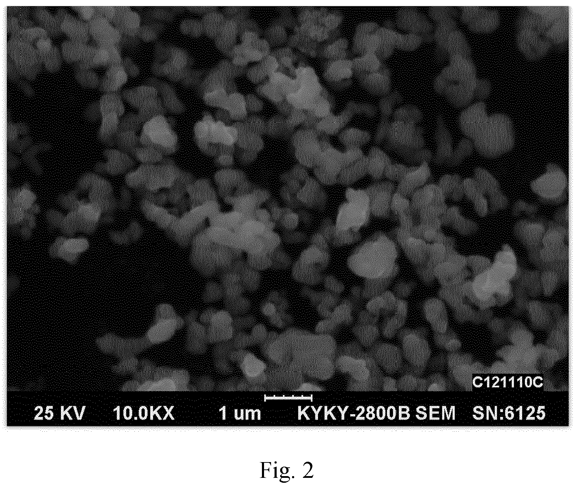

(1) Iron nitrate, manganese nitrate and sodium nitrate were mixed in a mass ratio of 0.75:0.25:1.9, pure water was added, dissolved, and mixed uniformly, with the mass ratio of the total mass of iron nitrate, manganese nitrate and sodium nitrate to the mass of pure water being 1:6. Then the mixture was heated up to 700°C at a rate of 2.5°C/h, calcined for 5 hours, and then cooled until the material temperature was ≤80°C before discharging. The waste gas generated during calcination was absorbed with sodium hydroxide solution to obtain sodium nitrate solution for recycling. The precursor can be obtained by the method of step (1), and the main components of the precursor were a mixture of iron nitrate, manganese nitrate and sodium nitrate. The performance test data of the precursor is shown in Table 1. The SEM images of the precursor before and after pulverization are shown in Figs. 1 and 2, respectively.

**Table 1**

| **Indexes** | **Na** | **Fe** | **Mn** |
|---|---|---|---|
| Data | 30.18% | 28.91% | 9.52% |

| **Tap density** | **Apparent density** | **D10** | **D50** |
|---|---|---|---|
| 1.19 g/mL | 0.62 g/mL | 0.21 µm | 0.72 µm |

| **D90** | **BET** | **Ca** | **Mg** |
|---|---|---|---|
| 3.75 µm | 7.4 m²/g | 31.5 ppm | 18.9 ppm |

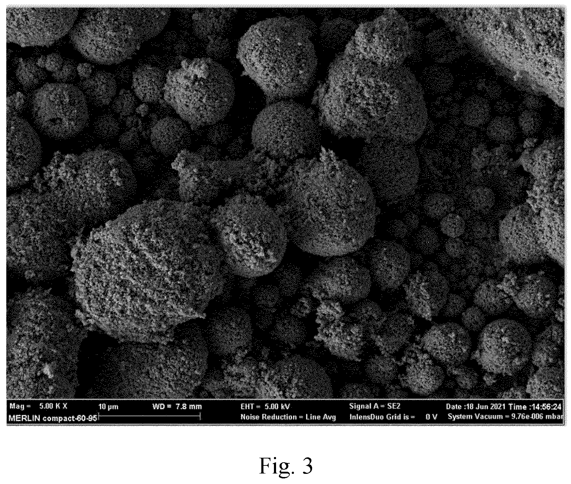

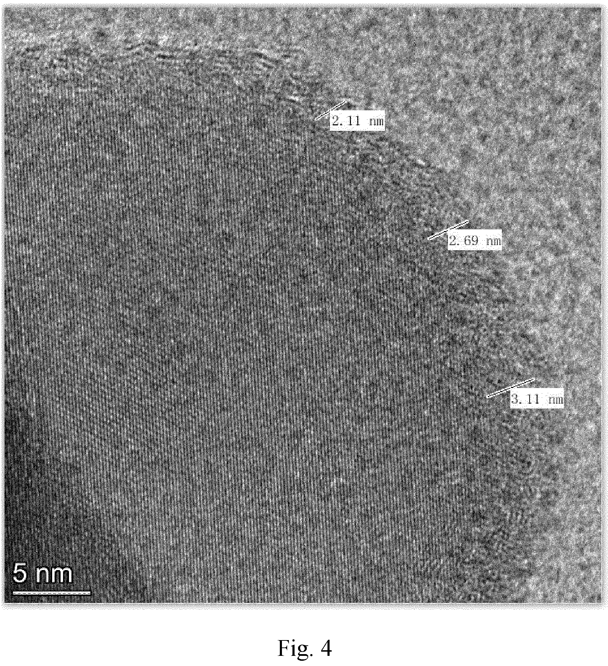

(2) The precursor was mixed with isopropyl orthosilicate and tetraisopropyl titanate, the molar ratio of sodium in the precursor, silicon in the silicate and titanium in the titanate was 2:0.8:0.25. Ethanol solvent was added with a precursor to ethanol mass ratio of 1:4. The mixture was placed into a sand mill for grinding, using zirconium balls as grinding media. The grinding process was cooled with cold water to maintain the temperature of the organic solvent at ≤ 45 °C, and the mixture was grinded until the particle size of the slurry was 130 nm to obtain a ground material.
(3) The ground material was subjected to pressure spray drying with nitrogen as a heating medium, the nitrogen was heated to 330 °C, then introduced into a spray drying tower to dry the sprayed droplets. The organic solvent was gasified, then the spray-dried material and the organic gas entered a cyclone dust-collecting tower for solid-gas separation. The solid was collected, the nitrogen and the organic gas were filtered through a dust-collecting cloth bag, and then condensed, the organic solvent was recovered, and the nitrogen was recycled for use. In the spray drying process, the gas pressure for pressure spray drying was 9 atmospheres, and the volume of gas intake per unit time was 1500 times of the volume of slurry feed. Spray-dried material with a D50 particle size of 9.2 µm was obtained through the above-mentioned steps.
(4) The spray-dried material was placed into an atmosphere furnace for calcination, and the calcination included a heating stage, a heat preservation stage and a cooling stage. Nitrogen was introduced into the heat preservation stage during the calcination to maintain the oxygen content in the furnace below 5 ppm. The heating rate in the heating stage was 1.3 °C/h, reaching a temperature of 620°C. The material was then held at this temperature for 13 hours before cooling. The cooling rate was 1.4°C/h, and the cooling continued until the material temperature was ≤60°C before stopping, and then the material was discharged. During the holding stage, n-propanol was introduced into the system. N-propanol, preheated to a vapor state, was injected into the bottom of the loading sagger in the furnace through a gas pipe, with the total mass of organic gas introduced being 0.04 times the mass of the spray-dried material. The cooled material was pulverized, sieved with 125 mesh, electromagnetically de-ironed until the content of the magnetic substance was less than 0.87 ppm, and then the operation was stopped. The product was mixed with polyurethane binder and ethyl acetate, and then direct spray granulation was performed without pulverization, resulting in spherical carbon-coated cathode material for sodium batteries, with a molecular formula of Na_{1.97}Fe_{0.77}Mn_{0.25}(TiO₂)_{0.25}(SiO₄)_{0.77}/C, and a particle size of 7.8 µm. The SEM image is shown in Fig. 3, and the performance is shown in Table 2. The pulverized cathode material for sodium batteries was subjected to transmission electron microscopy testing, and the results were shown in Fig. 4. It can be seen that the surface of sodium iron manganese titanium silicate was coated with a carbon layer of about 2.5 nm, and the sodium iron manganese titanium silicate was uniformly coated by the carbon layer.

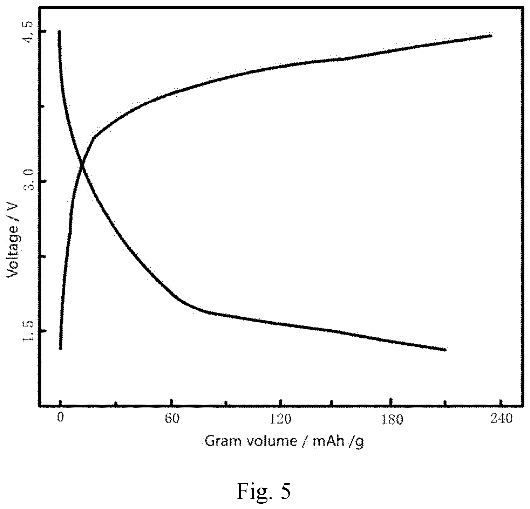

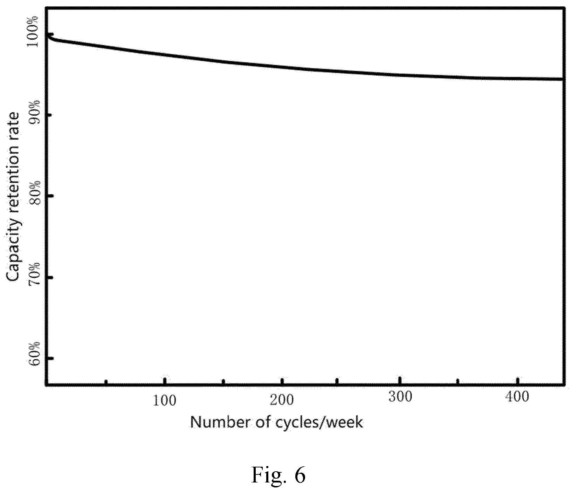

The cathode material for sodium batteries according to the present invention was assembled into a battery, and the charge-discharge curve is shown in Fig. 5, and the cycle curve is shown in Fig. 6.

**Table 2**

| **Indexes** | **Na content** | **Fe content** | **Mn content** | **Si content** |
|---|---|---|---|---|
| Data | 22.69% | 21.61% | 7.02% | 11.89% |

| **Ti** | **Tap density** | **Compacted density** | **BET specific surface area** | **Powder resistivity** |
|---|---|---|---|---|
| 4.95% | 0.95 g/mL | 2.15 g/mL | 19.75 m²/g | 9.5 Ω·cm |

| **Free sodium** | **pH** | **C** | **Ca** | **Mg** |
|---|---|---|---|---|
| 69.8 ppm | 9.35 | 2.74% | 36.2 ppm | 21.9 ppm |

| **Co** | **Ni** | **Cu** | **Zn** | **Magnetic foreign matter** |
|---|---|---|---|---|
| 0.6 ppm | 1.2 ppm | 0.2 ppm | 12.5 ppm | 0.87 ppm |

| **0.1C charge capacity** | **0.1C discharge capacity** | **First discharge efficiency** | **0.5C discharge capacity** | **1C discharge capacity** |
|---|---|---|---|---|
| 231.1 mAh/g | 210.3 mAh/g | 91.0% | 207 mAh/g | 195 mAh/g |

| **Capacity retention rate at -20 °C** | **1C Ambient temperature cycle** | **Iron dissolution** | **Manganese dissolution** | **D10** |
|---|---|---|---|---|
| 86.7% | 450 weeks, capacity retention rate of 95.2% | 14.8 ppm | 21.5 ppm | 2.9 µm |

| **D50** | **D90** | | | |
|---|---|---|---|---|
| 7.8 µm | 25.3 µm | | | |

As can be seen from the data that the material provided in the present invention exhibits a remarkably high capacity and a long cycle life.

### Comparative Example 1

Referring to the procedure and condition parameters in Example 1, the precursor obtained in step (1) was mixed with silica and titania, and ethanol was added to carry out the subsequent test. The molar ratio of sodium in the precursor, silicon in silica and titanium in titania is 2:0.8:0.25.

The performance test of the product obtained in this Comparative Example is shown in Table 3 below. It can be seen that the cathode material for sodium ion batteries prepared from the raw materials not only exhibits a significant decrease in initial discharge efficiency but also experiences a substantial reduction in capacity retention at both -20°C and room temperature.

**Table 3**

| **Indexes** | **BET** | **0.1C charge capacity** | **0.1C discharge capacity** | **First discharge efficiency** |
|---|---|---|---|---|
| **Data** | 13.62 m²/g | 193.1 mAh/g | 160.5 mAh/g | 83.12% |

| **0.5C discharge capacity** | **1C discharge capacity** | **capacity retention rate at -20°C** | **1C Ambient temperature cycle** | **Compacted density** |
|---|---|---|---|---|
| 149.1 mAh/g | 143.2 mAh/g | 80.1% | 450 weeks, capacity retention rate of 93.2% | 2.29 g/mL |

## Claims

1. A cathode material for sodium batteries, **characterized in that** the cathode material for sodium batteries comprises a carbon layer-coated sodium iron manganese titanium silicate having a molecular formula of Na_{q}FeₓMn_{y}(TiO₂)_{z}(SiO₄)ₘ, wherein 1.5≤q≤2.5, 0.7 ≤ x ≤ 0.8, 0.2 ≤ y ≤ 0.3, 0.07 ≤ z ≤ 0.5, and 0.5 ≤ m ≤ 1.5.

2. The cathode material for sodium batteries of claim 1, **characterized in that** the cathode material for sodium batteries has a specific surface area of 15-25 m²/g, a powder resistivity of 8-12 Ω·cm, and a D50 particle size of 7-10 µm.

3. The cathode material for sodium batteries of claim 1, **characterized in that** the cathode material for sodium batteries has a tap density of 1-2 g/mL and a compacted density of 1-3 g/mL; and
the carbon layer has a thickness of 2-3 nm.

4. A preparation method of the cathode material for sodium batteries according to claim 1, **characterized in that** the preparation method comprises:
(1) mixing and calcining an iron source, a manganese source, a sodium source, and a solvent to obtain a precursor; and
(2) mixing the precursor with a silicate, a titanate, and an organic solvent to obtain a mixture, and calcining the mixture in the presence of an organic substance to obtain the cathode material for sodium batteries,
wherein a molar ratio of the iron source, the manganese source, and the sodium source is 1:(0.1-1):(5-10),
wherein a molar ratio of sodium in the precursor, silicon in the silicate, and titanium in the titanate is 2:(0.7-0.9):(0.1-0.3),
wherein a mass ratio of the organic substance to the mixture is 1:(0.02-0.05), and
wherein in step (1), the calcination is performed at a temperature of 650-750 °C for 4-6 h; and in step (2), the calcination is performed at a temperature of 620 °C for 10-15 h.

5. The preparation method of a cathode material for sodium batteries of claim 4, **characterized in that** the sodium source is one or more of sodium nitrate, sodium nitrite, sodium citrate, sodium stearate, sodium oleate, sodium tartrate, sodium alginate, sodium carboxymethyl cellulose or sodium lactate;
the iron source is one or more of iron nitrate, iron citrate, iron stearate, iron oleate, iron tartrate, iron alginate, iron carboxymethyl cellulose, or iron lactate;
the manganese source is one or more of manganese nitrate, manganese citrate, manganese stearate, manganese oleate, manganese tartrate, manganese alginate,
manganese carboxymethyl cellulose, or manganese lactate;
the silicate is one or more of isopropyl orthosilicate, ethyl orthosilicate or trimethylsiloxy silicate; and
the titanate is one or more of tetraisopropyl titanate, tetrabutyl titanate or tetraethyl titanate.

6. The preparation method of a cathode material for sodium batteries of claim 4, **characterized in that** the preparation method further comprises: in the step (2), mixing the calcined material with a binder and a diluent, and performing spray granulation to obtain the cathode material for sodium batteries.

7. A battery comprising the cathode material for sodium batteries of any one of claims 1 to 3.

## Patentansprüche

1. Kathodenmaterial für Natriumbatterien, **dadurch gekennzeichnet, dass** das Kathodenmaterial für Natriumbatterien eine mit einer Kohlenstoffschicht beschichtete Natrium-Eisen-Mangan-Titan-Silikat-Verbindung mit der Molekularformel Na_{q}FeₓMn_{y}(TiO₂)_{z}(SiO₄)ₘ umfasst, wobei 1,5 ≤ q ≤ 2,5, 0,7 ≤ x ≤ 0,8, 0,2 ≤ y ≤ 0,3, 0,07 ≤ z ≤ 0,5 und 0,5 ≤ m ≤ 1,5.

2. Das Kathodenmaterial für Natriumbatterien nach Anspruch 1, **dadurch**
**gekennzeichnet, dass** das Kathodenmaterial für Natriumbatterien eine spezifische Oberfläche von 15-25 m²/g, einen Pulverwiderstand von 8-12 Ω·cm und eine D50-Partikelgröße von 7-10 µm aufweist.

3. Das Kathodenmaterial für Natriumbatterien nach Anspruch 1, **dadurch**
**gekennzeichnet, dass** das Kathodenmaterial für Natriumbatterien eine Schüttdichte von 1-2 g/mL und eine Pressdichte von 1-3 g/mL aufweist; und
die Kohlenstoffschicht eine Dicke von 2-3 nm aufweist.

4. Ein Herstellungsverfahren des Kathodenmaterials für Natriumbatterien nach Anspruch 1, **dadurch gekennzeichnet, dass** das Herstellungsverfahren Folgendes umfasst:
(1) Mischen und Kalzinieren einer Eisenquelle, einer Mangankomponente, einer Natriumquelle und eines Lösungsmittels zur Erzeugung eines Vorläufers; und
(2) Mischen des Vorläufers mit einem Silikat, einem Titanat und einem organischen Lösungsmittel zur Erzeugung eines Gemisches und Kalzinieren des Gemisches in Anwesenheit einer organischen Substanz zur Erzeugung des Kathodenmaterials für Natriumbatterien,
wobei das molare Verhältnis der Eisenquelle, der Mangankomponente und der Natriumquelle 1:(0,1-1):(5-10) beträgt,
wobei das molare Verhältnis von Natrium im Vorläufer, Silicium im Silikat und Titan im Titanat 2:(0,7-0,9):(0,1-0,3) beträgt,
wobei das Massenverhältnis der organischen Substanz zum Gemisch 1:(0,02-0,05) beträgt und
wobei in Schritt (1) die Kalzinierung bei einer Temperatur von 650-750 °C für 4-6 Stunden erfolgt; und in Schritt (2) die Kalzinierung bei einer Temperatur von 620 °C für 10-15 Stunden erfolgt.

5. Das Herstellungsverfahren des Kathodenmaterials für Natriumbatterien nach Anspruch 4, **dadurch gekennzeichnet, dass** die Natriumquelle eine oder mehrere der folgenden Substanzen ist: Natriumnitrat, Natriumnitrit, Natriumcitrat, Natriumstearat, Natriumoleat, Natriumtartrat, Natriumalginat, Natriumcarboxymethylcellulose oder Natriumlactat;
die Eisenquelle eine oder mehrere der folgenden Substanzen ist: Eisennitrat, Eisencitrat, Eisenstearat, Eisenoleat, Eisentartrat, Eisenalginat, Eisencarboxymethylcellulose oder Eisenlactat;
die Mangankomponente eine oder mehrere der folgenden Substanzen ist: Mangannitrat, Mangancitrat, Manganstearat, Manganoleat, Mangantartrat, Manganalginat, Mangancarboxymethylcellulose oder Manganlactat;
das Silikat eines oder mehrere der folgenden Silikate ist: Isopropylorthosilikat, Ethylorthosilikat oder Trimethylsiloxysilikat; und
das Titanat eines oder mehrere der folgenden Titanate ist: Tetraisopropyltitanat, Tetrabutyltitanat oder Tetraethyltitanat.

6. Das Herstellungsverfahren des Kathodenmaterials für Natriumbatterien nach Anspruch 4, **dadurch gekennzeichnet, dass** das Herstellungsverfahren weiterhin Folgendes umfasst: In Schritt (2) wird das kalzinierte Material mit einem Bindemittel und einem Verdünnungsmittel gemischt, und es wird eine Sprühgranulation durchgeführt, um das Kathodenmaterial für Natriumbatterien zu erhalten.

7. Eine Batterie, die das Kathodenmaterial für Natriumbatterien nach einem der Ansprüche 1 bis 3 umfasst.

## Revendications

1. Un matériau de cathode pour batteries au sodium, **caractérisé en ce que** le matériau de cathode pour batteries au sodium comprend un silicate de sodium-fer-manganèse-titane revêtu d'une couche de carbone ayant une formule moléculaire de Na_{q}FeₓMn_{y}(TiO₂)_{z}(SiO₄)ₘ, dans laquelle 1,5 ≤ q ≤ 2,5, 0,7 ≤ x ≤ 0,8, 0,2 ≤ y ≤ 0,3, 0,07 ≤ z ≤ 0,5, et 0,5 ≤ m ≤ 1,5.

2. Le matériau de cathode pour batteries au sodium selon la revendication 1, **caractérisé en ce que** le matériau de cathode pour batteries au sodium présente une surface spécifique de 15-25 m²/g, une résistivité de poudre de 8-12 Ω·cm, et une taille de particule D50 de 7-10 µm.

3. Le matériau de cathode pour batteries au sodium selon la revendication 1, **caractérisé en ce que** le matériau de cathode pour batteries au sodium présente une densité apparente de 1-2 g/mL et une densité compactée de 1-3 g/mL ; et
la couche de carbone a une épaisseur de 2-3 nm.

4. Un procédé de préparation du matériau de cathode pour batteries au sodium selon la revendication 1, **caractérisé en ce que** le procédé de préparation comprend :
(1) mélanger et calciner une source de fer, une source de manganèse, une source de sodium et un solvant pour obtenir un précurseur ; et
(2) mélanger le précurseur avec un silicate, un titanate et un solvant organique pour obtenir un mélange, et calciner le mélange en présence d'une substance organique pour obtenir le matériau de cathode pour batteries au sodium,
dans lequel un rapport molaire de la source de fer, de la source de manganèse et de la source de sodium est de 1:(0,1-1):(5-10),
dans lequel un rapport molaire du sodium dans le précurseur, du silicium dans le silicate, et du titane dans le titanate est de 2:(0,7-0,9):(0,1-0,3),
dans lequel un rapport massique de la substance organique au mélange est de 1:(0,02-0,05), et
dans lequel à l'étape (1), la calcination est effectuée à une température de 650-750 °C pendant 4-6 h ; et à l'étape (2), la calcination est effectuée à une température de 620 °C pendant 10-15 h.

5. Le procédé de préparation du matériau de cathode pour batteries au sodium selon la revendication 4, **caractérisé en ce que** la source de sodium est un ou plusieurs parmi le nitrate de sodium, le nitrite de sodium, le citrate de sodium, le stéarate de sodium, l'oléate de sodium, le tartrate de sodium, l'alginate de sodium, la carboxyméthylcellulose de sodium ou le lactate de sodium ;
la source de fer est un ou plusieurs parmi le nitrate de fer, le citrate de fer, le stéarate de fer, l'oléate de fer, le tartrate de fer, l'alginate de fer, la carboxyméthylcellulose de fer ou le lactate de fer ;
la source de manganèse est un ou plusieurs parmi le nitrate de manganèse, le citrate de manganèse, le stéarate de manganèse, l'oléate de manganèse, le tartrate de manganèse, l'alginate de manganèse, la carboxyméthylcellulose de manganèse ou le lactate de manganèse ;
le silicate est un ou plusieurs parmi l'orthosilicate d'isopropyle, l'orthosilicate d'éthyle ou le silicate de triméthylsiloxy ; et
le titanate est un ou plusieurs parmi le tétra-isopropyl titanate, le tétrabutyl titanate ou le tétraéthyl titanate.

6. Le procédé de préparation du matériau de cathode pour batteries au sodium selon la revendication 4, **caractérisé en ce que** le procédé de préparation comprend en outre : à l'étape (2), mélanger le matériau calciné avec un liant et un diluant, et effectuer une granulation par pulvérisation pour obtenir le matériau de cathode pour batteries au sodium.

7. Une batterie comprenant le matériau de cathode pour batteries au sodium selon l'une quelconque des revendications 1 à 3.
